# FASCICULE DE BREVET EUROPEEN

(11) **EP 2 726 421 B1**
(45) Date de publication et mention de la délivrance du brevet: **04.03.2015**
(21) Numéro de dépôt: 12743481.9
(22) Date de dépôt: 29.06.2012
(51) Int. Cl.: C03B 29/02, B23K 26/00, B24B 13/00

(54) **PROCEDE DE FABRICATION D'UN COMPOSANT OPTIQUE POUR SUPPRIMER DES DEFAUTS DE SURFACE**
VERFAHREN ZUR HERSTELLUNG EINER OPTISCHEN KOMPONENTE ZUR BESEITIGUNG VON OBERFLÄCHENFEHLERN
METHOD FOR MANUFACTURING AN OPTICAL COMPONENT FOR ELIMINATING SURFACE DEFECTS

(30) Priorité: 01.07.2011 FR 1155971
(43) Date de publication de la demande: 07.05.2014
(73) Titulaire: Commissariat à l'Énergie Atomique et aux Énergies Alternatives, 75015 Paris (FR)
(72) Inventeur: CORMONT, Philippe, F-33110 Le Bouscat (FR); RULLIER, Jean-Luc, F-33470 Gujan-Mestras (FR)
(74) Mandataire: Coralis Harle
(86) Numéro de dépôt international: PCT/FR2012/051506
(87) Numéro de publication internationale: WO 2013/004955

(56) Documents cités:
- EP-A1- 0 535 620
- WO-A1-2011/033234
- US-A1- 2002 046 998
- US-A1- 2002 185 611

## Description

La présente invention se rapporte à la fabrication des composants optiques tels que les lentilles, des lames ou des prismes. Plus précisément, la présente invention concerne un procédé de fabrication de composants optiques présentant une excellente qualité de surface optique, comprenant la suppression d'au moins un défaut en surface d'un composant optique. L'invention concerne aussi un procédé de traitement de surface d'un composant optique en verre afin de supprimer les défauts de surface de dimensions inacceptables pour l'utilisation finale du composant optique, quelle que soit la forme de cette surface optique.

La fabrication de composants optiques en verre comporte classiquement une étape d'ébauchage, une étape de doucissage suivie d'une ou plusieurs étapes de polissage et éventuellement une étape de finition. L'ébauchage consiste à façonner le matériau de verre aux dimensions requises pour le composant optique et à usiner la ou les surface(s) optique(s) selon la forme désirée : plane, concave, convexe, sphérique ou asphérique. Le doucissage ou douci vise à réduire la rugosité de la surface optique du verre avant l'étape de polissage. L'étape de polissage réduit encore la rugosité de la pièce optique pour la rendre transparente et donne la qualité de planéité quasi-finale. L'étape de finition peut être menée pour améliorer une ou plusieurs qualités de l'optique comme sa rugosité, sa planéité ou sa tenue au flux. L'étape de finition est un procédé de post-polissage qui peut être mis en oeuvre de différentes façons : polissage local par robot, polissage local par faisceau d'ions, polissage magnéto-rhéologique (MRF), super polissage, attaque chimique... L'enchaînement de ces étapes de fabrication permet donc de diminuer régulièrement la rugosité des optiques avec des étapes dont les vitesses d'enlèvement de matière sont de plus en plus faibles. La rugosité moyenne de surface est inférieure à 200 nanomètres après douci et à 2 nanomètres après poli. Les enlèvements de matière diminuent à chaque étape : à l'ébauche, l'épaisseur de matière enlevée par face est supérieure à 500 microns (µm); au douci, elle est comprise entre 50 et 500 µm ; au poli, entre 10 et 100 µm et au final, l'épaisseur de matière enlevée en finition est inférieure à 10 µm par face. Lors des étapes de doucissage et/ou de polissage, des imperfections de surface telles que des rayures, des filandres, des piqûres ou des éclats peuvent apparaître. Ces défauts de surface peuvent aussi provenir d'étapes de fabrication en amont du polissage si les enlèvements de matière n'ont pas été suffisants lors du doucissage. Mais même pour des procédés de fabrication correctement maîtrisés, il peut arriver que des particules non-désirées se glissent entre le composant optique et l'outil de polissage. Ces particules peuvent être des agglomérats du produit de polissage, des débris de l'outil de polissage ou encore des poussières de l'environnement. La taille des défauts de surface dépend alors de la taille et de la nature de ces particules, comme cela a été décrit dans la publication ("Effect of rogue particles on the sub-surface damage of fused silica during grinding/polishing", T. Suratwala, Journal of Non-Crystalline Solids 354 (2008) p. 2023-2037).

Pour les composants optiques de bonne qualité, les dimensions des imperfections de surface considérées sont de l'ordre de quelques micromètres à quelques dizaines de micromètres en largeur et jusqu'à plusieurs millimètres en longueur. La profondeur des défauts considérés est inférieure à 20 micromètres. La densité de défauts varie de quelques 0,01 défauts/cm² à plusieurs dizaines par cm² suivant la qualité de fabrication et suivant la taille des composants optiques.

Les défauts de surface diffractent ou diffusent la lumière et peuvent aussi affecter la durabilité de l'élément optique quelle que soit son utilisation. L'élément optique ou l'ensemble optique dont une des faces présente des défauts de surface perd alors une partie de ses qualités pour le transport de faisceau lumineux. Pour les applications avec un faisceau laser de puissance, les imperfections de surface doivent être limitées en nombre et en taille car ces imperfections sont à l'origine de dommages beaucoup plus étendus susceptibles de limiter la transmission du composant optique.

Le brevet EP0196730 décrit une méthode pour réparer les détériorations de surface lors du recyclage des bouteilles de verre, c'est-à-dire après leur fabrication et leur utilisation. Selon cette méthode, un faisceau laser de 0,7 mm de diamètre balaye la totalité de la surface d'une bouteille de verre pour porter la surface du verre à une température de 500-600°C. La température de surface étant supérieure à la température de ramollissement du verre, ceci conduit à refondre localement la surface extérieure de la bouteille et ainsi à supprimer les défauts ayant une profondeur supérieure à 10 microns. Le brevet US2004/154646 décrit une méthode de réparation de vitrages afin d'enlever des défauts de surfaces tels que des rayures ayant une profondeur de 10 µm à 0.1mm. Le procédé comprend une étape de refonte locale d'une face du verre par exposition à une source de chaleur sur une zone de plusieurs millimètres carré. Toutefois, ces techniques de refonte d'une surface de verre induisent des déformations de surface incompatibles avec les qualités de surface optique exigées pour les systèmes optiques utilisés par exemple dans une chaîne laser de puissance.

Il existe différentes méthodes pour réparer les rayures ayant des dimensions de l'ordre du millimètre sur les fenêtres ou hublots qui ne demandent pas une planéité de surface telle que celle qui est nécessaire pour les applications d'optique de précision. Par exemple, les brevets EP1473143, US2003/205831, US 4047863, US 3914145 et WO2000/024567 décrivent certaines de ces méthodes. Ces méthodes permettent d'obtenir l'effet visuel souhaité et éventuellement de renforcer la résistance de la fenêtre mais en aucun cas elles ne peuvent s'appliquer sur des composants optiques de précision car les solutions proposées déforment la surface d'onde transmise par l'optique soit à cause des modifications locales de surface soit à cause du changement d'indice du matériau induit par le traitement.

D'autre part, de nombreuses études ont été menées sur les procédés de polissage dans le but de réduire les défauts de surface de composants optiques. Ainsi les brevets JP2000-117605, WO2001/083163 et JP2001-239454 proposent des méthodes pour polir des surfaces en réduisant le nombre de défauts. Cependant ces méthodes obligent le fabricant de composants optiques à changer sa gamme de fabrication et ses outils de polissage ce qui peut se faire mais au détriment des autres performances obtenues précédemment telle que la planéité de surface.

Les brevets US 2002/0046998 et FR2896794 proposent des procédés efficaces pour augmenter la résistance des surfaces optiques à un flux laser de puissance. Toutefois, ces procédés ont pour inconvénients de diminuer la planéité de la surface optique et de nécessiter des opérations supplémentaires pour faire apparaître les dommages après la fabrication du composant optique.

Dans la fabrication de composants optiques, on tente généralement de corriger les défauts de surface apparaissant au cours de la fabrication avec les mêmes outils que ceux utilisés pour la fabrication, c'est-à-dire les machines de polissage, combinées à des produits de polissage de qualité supérieure (pâte à polir de grain de plus en plus fin par exemple). La technique la plus utilisée pour corriger des imperfections en surface d'un composant optique consiste à enlever une épaisseur de matière au moins équivalente à la profondeur du défaut. Pour ne pas déformer la surface, cet enlèvement doit être uniforme sur toute la surface. Or, l'enlèvement à effectuer est d'autant plus important que le défaut est profond. Sur des composants optiques ayant des défauts dont la profondeur est trop importante par rapport aux enlèvements effectués habituellement, il peut être alors nécessaire de reprendre la fabrication à l'étape précédente. Ainsi l'étape finale de polissage enlève une épaisseur de quelques micromètres. Or si une rayure apparaît lors de cette étape de polissage et que cette rayure a une profondeur d'une ou de plusieurs dizaines de micromètres, il est alors nécessaire de reprendre le composant optique à l'étape de polissage précédente qui produit des enlèvements de plusieurs dizaines de micromètres. Le résultat n'est pas garanti puisque des nouveaux défauts sont souvent créés lors de cet enlèvement important. Chaque étape de fabrication et de polissage utilise des produits différents et parfois des machines différentes. Ces cycles de fabrication peuvent donc être longs et ne sont pas prévisibles. De plus les vitesses d'enlèvement matière diminuent fortement après les étapes d'ébauchage. Elles vont de quelques centaines de micromètres par minute pour le douci, juste après l'ébauche, jusqu'à des vitesses aussi faibles que quelques micromètres par heure. Enfin, lorsque l'on a des limites sur l'épaisseur minimale du composants, il est parfois impossible de repolir sans passer en deçà de la cote minimale.

Un autre procédé de traitement correctif d'un défaut sur la surface d'un composant optique, par application d'un faisceau laser sur la zone à traiter est connu du document WO 2011/033234 A1. Ce procédé s'applique à un composant optique fini, complètement dissocié d'un procédé de fabrication.

Un des buts de l'invention est de proposer une méthode permettant de fabriquer un composant optique dont les défauts non tolérables pour l'application de destination finale ont été supprimés.

Un autre but de l'invention est de raccourcir la durée de fabrication d'un composant optique tout en améliorant la qualité de surface optique de ce composant, c'est-à-dire en réduisant la densité de défauts de surface et/ou la taille des défauts de surface. Un autre but de l'invention est de proposer un procédé pour corriger les défauts de surface d'un composant optique ayant une surface optique plane, concave ou convexe. Encore un autre but de l'invention est de proposer un procédé pour durcir un composant optique destiné à être exposé à un rayonnement laser de puissance.

La présente invention a pour but de remédier aux inconvénients des méthodes antérieures et concerne plus particulièrement un procédé de fabrication d'un composant optique selon la revendication 1.

Selon différents aspects particuliers du procédé de fabrication de l'invention :
- l'étape e) de contrôle de la surface optique du composant optique comprend un acidage chimique ;
- l'étape e) de contrôle comprend une mesure optique de diffusion et/ou de diffraction ;
- l'étape e) de contrôle comprend la détection et localisation d'au moins un défaut de surface ayant une dimension transverse supérieure ou égale à 10 microns sur la surface optique ;
- l'étape f) d'application d'un faisceau laser comprend l'application d'un faisceau laser CO₂ à une longueur d'onde de 10.6 µm, ledit laser étant continu ou pulsé ;
- le matériau fusible est du verre et l'étape f) d'application d'un faisceau laser entraîne une élévation de la température locale du verre, ladite température locale du verre étant comprise entre 1000K et 2000K dans une zone englobant ledit défaut de surface à supprimer localisé à l'étape e) ;
- l'étape f) est combinée à un balayage spatial du faisceau laser sur la surface du composant optique le long du défaut de surface à supprimer ;
- l'étape de polissage qui suit l'étape f) comprend un enlèvement de matière sur une épaisseur inférieure à la profondeur du défaut initial de surface et supérieure ou égale à la profondeur des déformations de surface de la zone de matériau refondu par laser générée par l'étape f) d'application du faisceau laser ;
- l'enlèvement de matière lors de l'étape de polissage qui suit l'étape f) est compris entre 1 et 20 microns.

L'invention concerne aussi un procédé de durcissement aux rayonnements laser de puissance d'un composant optique comprenant un substrat en matériau fusible, ledit substrat comprenant une surface optique polie ou finie, ledit procédé de durcissement comprenant les étapes suivantes :
h. Contrôle de la surface optique polie ou finie du composant optique pour détecter et localiser au moins un défaut de surface à supprimer sur la surface optique du composant optique ;
i. Pour chaque défaut de surface à supprimer localisé à l'étape h), application d'un faisceau laser sur une zone englobant le défaut de surface, ledit faisceau laser ayant une longueur d'onde d'émission laser apte à être absorbée par ledit matériau, de manière à produire une refonte locale du matériau fusible, la densité de puissance du faisceau laser et la durée d'application du faisceau laser étant fonction des dimensions transverses du défaut de surface à supprimer localisé à l'étape h) de manière à former, à la place du défaut de surface à supprimer, une zone de matériau refondu par laser ;
j. Reprise du procédé de fabrication du composant optique à l'étape c) du procédé de la revendication 1 lorsque l'étape i) a été effectuée avant la fin de l'étape c); ou respectivement à l'étape d) du procédé de la revendication 1 lorsque l'étape i) a été effectuée après la fin de l'étape c).

L'invention trouvera une application particulièrement avantageuse dans la fabrication de composants optiques de grande précision sur substrat de verre, notamment destinés à être utilisés sur une chaîne laser de puissance.

La présente invention concerne également les caractéristiques qui ressortiront au cours de la description qui va suivre et qui devront être considérées isolément ou selon toutes leurs combinaisons techniquement possibles.

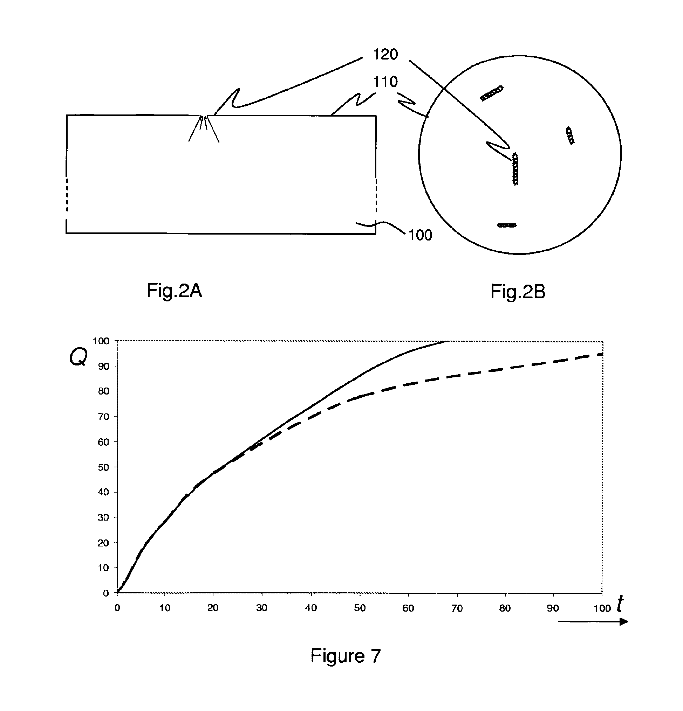

Cette description donnée à titre d'exemple non limitatif fera mieux comprendre comment l'invention peut être réalisée en référence aux dessins annexés sur lesquels :
- la figure 1 représente schématiquement les étapes d'un procédé de fabrication d'un composant optique selon l'état de la technique ;
- la figure 2 représente schématiquement une vue en coupe (Fig 2A) et une vue de dessus (Fig. 2B) d'un composant optique présentant des défauts de surface ;
- la figure 3 représente schématiquement les étapes d'un procédé de fabrication d'un composant optique selon un mode de réalisation de l'invention;
- la figure 4 représente schématiquement une vue d'une partie du dispositif pour refondre localement les défauts de surface d'un composant optique ;
- la figure 5 représente schématiquement une vue en coupe (Fig. 5A) et une vue de dessus (Fig. 5B) du même composant optique que celui de la figure 2, après une étape de refonte locale d'un défaut de surface ;
- la figure 6 représente schématiquement une vue en coupe d'un composant optique lors des principales étapes du procédé selon un mode de réalisation de l'invention, la figure 6A représente une première étape de polissage et de localisation d'un défaut de surface, la figure 6B représente la zone de matériau refondu par laser générée suite à la refonte locale du défaut de la fig. 6A, et la figure 6C représente la surface optique du composant optique après l'étape de polissage ;
- la courbe de la figure 7 représente schématiquement une mesure de la qualité optique de la surface optique d'un composant optique en fonction de la durée du procédé de fabrication, respectivement selon la technique de fabrication de l'art antérieur (courbe en trait pointillés) et selon le procédé de l'invention (courbe en trait plein).

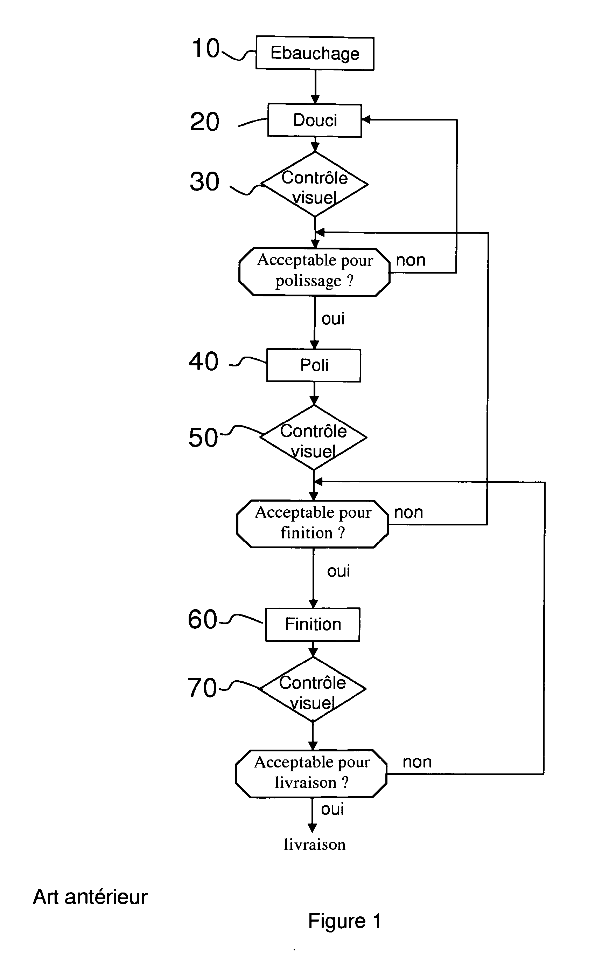

La figure 1 représente schématiquement un diagramme représentant les dernières étapes d'une méthode de fabrication classique d'un composant optique, qui est une méthode itérative. Nous ne détaillons pas ici les étapes de fabrication du matériau servant de substrat au composant optique. Le substrat est généralement en verre. L'étape 10 est une étape d'ébauchage où l'on donne la première façon au matériau de verre destiné à fabriquer un composant optique. Le composant optique est ébauché de manière à le façonner aux dimensions requises et de manière à usiner la surface optique selon la forme désirée : plane, concave, convexe, sphérique ou asphérique. Toutefois, l'ébauchage génère une surface optique diffusante ayant une forte rugosité de surface. L'étape 20 suivante est une étape de douci dont le but est de réduire la rugosité de la surface optique du verre, par exemple par frottement de cette surface au moyen d'une machine à doucir et de produits spécifiques. Plusieurs fois, en cours de fabrication et avant de livrer un composant optique, le fabricant effectue une inspection visuelle des surfaces et contrôle la présence de défauts. Pour effectuer les étapes de fabrication de polissage et de finition, un critère de qualité de surface est défini pour commencer l'étape. Ce critère est basé sur la taille et le nombre de défauts détectés. Plus le composant optique avance en fabrication et plus le critère est sévère, c'est-à-dire que les défauts acceptables sont de plus en plus petits. Si le critère d'entrée de l'étape est rempli, le composant peut effectuer l'étape et si ce n'est pas le cas, il faut vérifier que le composant répond au critère d'entrée de l'étape précédente. Après une première étape de doucissage 20, le fabricant effectue une première inspection visuelle 30 de la surface optique doucie et contrôle la présence de défauts. Si des défauts sont présents sur la surface optique doucie et rendent le composant optique non-conforme, le fabricant répète l'étape de douci 20, jusqu'à ce que la densité et/ou la taille des défauts sur la surface optique doucie soit conforme au critère de qualité d'entrée de polissage prédéfini pour le composant optique. Lorsque la qualité de la surface optique doucie du composant optique remplit le critère de qualité d'entrée de polissage, le composant optique douci est conforme. On procède à l'étape suivante de polissage 40, dont les buts sont de rendre la surface optique parfaitement lisse et d'avoir la mise en forme à la précision nécessaire, d'éliminer la diffusion et d'augmenter les coefficients de réflexion/transmission sur la surface optique. Après une première étape de polissage 40, le fabricant effectue une inspection visuelle 50 de la surface optique polie et contrôle la présence de défauts. Si le critère d'entrée de finition est rempli, le composant peut passer à l'étape de finition 60. Si ce n'est pas le cas, et que le critère d'entrée de polissage est rempli, le composant reste à l'étape de polissage 40. Si le critère de polissage n'est pas rempli, le composant retourne à l'étape de doucissage 20. L'étape de finition 60 permet une réduction significative de la rugosité. Elle utilise des paramètres de polissage optimisé (granulométrie fine des agents de polissage, contrôle chimique des fluides, environnement dépoussiéré) avec des enlèvements faibles de matière. L'étape de finition peut être par exemple un superpoli et/ou un polissage MRF. Après une première étape de finition 60, le fabricant effectue une inspection visuelle 70 de la surface optique polie et contrôle la présence de défauts. Tant que le composant n'est pas conforme aux spécifications finales de livraison, le composant optique reste en fabrication. Si le critère d'entrée de finition est rempli, le composant reste à l'étape de finition 60. Si ce n'est pas le cas, et que le critère d'entrée de polissage est rempli, le composant retourne à l'étape de polissage 40. Si le critère de polissage n'est pas rempli, le composant retourne à l'étape de doucissage 20.

On constate que la méthode classique de fabrication d'une surface optique d'un composant optique est une méthode itérative. Le contrôle visuel est une étape déterminante dans l'avancement de la fabrication du composant optique. Chaque étape de contrôle visuel 30 ou 50 ou 70 détermine la suite des opérations, et peut conduire à un retour en arrière dans la gamme de fabrication. Le procédé de fabrication de la figure 1 nécessite d'autant plus d'opérations de douci, de polissage et de finition que le critère de qualité optique est élevé. Par conséquent, le coût des composants optiques dépend fortement du critère de qualité exigé. De plus, malgré l'itération du nombre d'étapes de douci, de polissage et/ou de finition, la qualité de surface optique ne s'accroît pas indéfiniment mais atteint une limite. Il n'existe pas de composant optique présentant une qualité de surface optique absolument parfaite relativement à un front d'onde optique.

La figure 2 représente schématiquement une vue en coupe (Fig. 2A) et une vue de dessus (Fig. 2B) d'un composant optique 100 comprenant une surface optique 110. Le composant optique en verre présente des défauts de surface 120, qui peuvent être mis en évidence par exemple lors de l'étape 30 de contrôle visuel après douci, ou lors de l'étape 50 de contrôle visuel après poli. Le composant optique 100 peut être destiné à être utilisé en réflexion sur la surface optique 110 (miroir réfléchissant, la surface optique 110 étant éventuellement revêtue d'une couche mince réfléchissante) ou en transmission, le composant 100 pouvant être une lentille de focalisation.

Nous allons maintenant décrire en détail un procédé de fabrication permettant d'obtenir un composant optique dont la surface optique ne présente pas de défauts inacceptables, c'est-à-dire un composant optique exempt de défauts ayant des dimensions transverses supérieures à un critère prédéterminé, qui est fonction de l'utilisation prévue du composant optique.

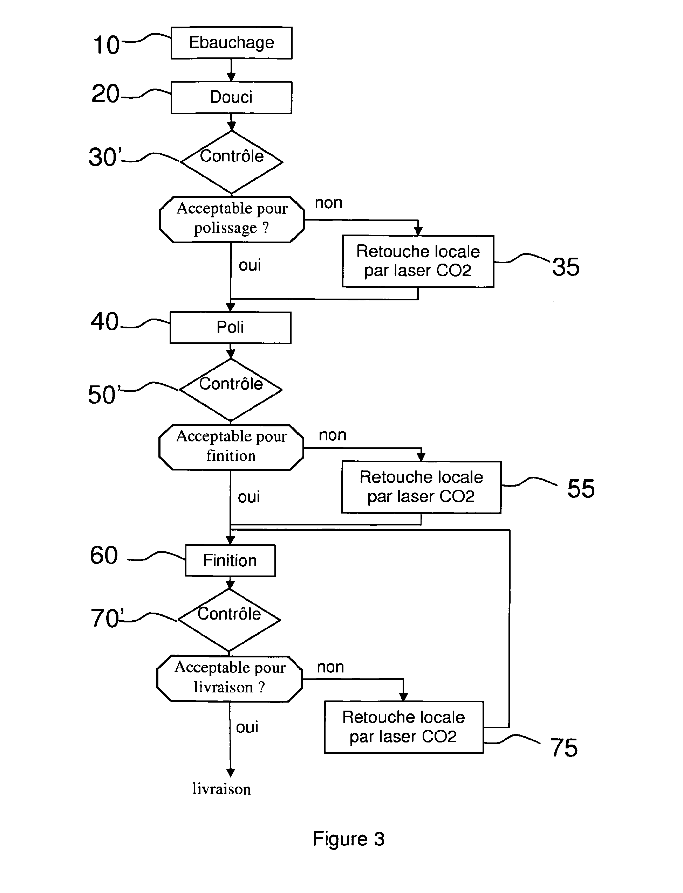

La figure 3 représente schématiquement le diagramme de la méthode de fabrication selon un mode de réalisation préféré de l'invention. Suite à l'étape 10 d'ébauchage, identique à celle de la technique antérieure détaillée en lien avec la figure 2, la surface optique présente une rugosité de surface importante. On effectue ensuite une étape de doucissage 20 de manière à obtenir une surface optique doucie, de manière classique. On procède ensuite à une étape de contrôle 30' de la surface optique doucie. L'étape de contrôle 30' peut être une étape de contrôle visuel, ou une étape de contrôle automatique, par exemple un contrôle optique au moyen d'une caméra ou d'un microscope et d'un éclairage adapté. Différents procédés d'inspection peuvent être mis en oeuvre dans le cadre de l'invention : contrôle optique de diffusion, thermoluminescence, acidage chimique pour rendre plus visible les défauts...La finalité de l'étape de contrôle 30' est de déterminer la position et la taille (longueur et largeur) des défauts de surface 120 sur la surface optique doucie. Si au moins un défaut 120 est présent sur la surface optique doucie et rend le composant non-conforme, au lieu de procéder à une nouvelle étape de doucissage, on oriente le composant optique 100 vers une étape intermédiaire 35 de retouche locale par laser CO₂. Dans notre mode d'utilisation préférée, le dispositif de retouche locale par laser CO₂ est utilisable sur le banc de contrôle optique ce qui permet de limiter les manipulations du composant optique et de réduire la durée de travail sur cette étape. Le but de cette étape 35 de retouche locale est d'éliminer les défauts 120 considérés comme inacceptables (dans la suite du présent document de tels défauts sont appelés défauts à supprimer), sur une profondeur pouvant aller jusqu'à 20 µm. Lors de cette première étape de retouche laser 35, on utilise de préférence un laser CO₂ dont le rayonnement est fortement absorbé par la silice. On dirige le faisceau laser, dont les paramètres sont adaptés au défaut, vers le défaut à supprimer préalablement localisé et dont on a mesuré la longueur et/ou la largeur. Le laser fait fondre la silice autour du défaut localisé 120 ce qui permet de retrouver les qualités dans la matière. Cependant, cette première étape de retouche laser 35 déforme la surface optique 110. On effectue ensuite une étape de polissage 40, de manière à obtenir les propriétés de surface nécessaires : faible rugosité et mise en forme de la surface optique. Suite à cette étape de polissage 40, on effectue une étape de contrôle 50' de la surface optique polie, pour détecter, localiser et mesurer d'éventuels défauts sur la surface optique polie. Si des défauts de surface 120 sont présents sur la surface optique polie et rendent le composant non-conforme, au lieu de procéder à une nouvelle étape de polissage, on oriente le composant optique 100 vers une autre étape intermédiaire 55 de retouche locale par laser CO₂ avec le même dispositif mais avec des paramètres de puissance adaptés au défaut de surface à supprimer. Le but de cette étape 55 de retouche locale est de supprimer les défauts de surface résiduels ou apparus lors du polissage. L'étape 55 déforme légèrement la surface optique 110. On effectue ensuite une étape classique de finition, dont l'enlèvement de matière se fait sur une profondeur d'environ 5 µm, pour atteindre la forme désirée à la surface du composant optique. Suite à cette étape de finition 60, on effectue une étape de contrôle 70' de la surface optique polie, pour détecter, localiser et mesurer d'éventuels défauts sur la surface optique polie. Si des défauts de surface 120 sont présents sur la surface optique polie et rendent le composant non-conforme, on oriente le composant optique 100 vers une étape intermédiaire 75 de retouche locale par laser CO₂ avec le même dispositif mais avec des paramètres de puissance adaptés au défaut de surface à supprimer. Le but de cette étape 75 de retouche locale est de supprimer les défauts de surface résiduels ou apparus lors de la finition. L'étape 75 déforme légèrement la surface optique 110. On effectue ensuite une nouvelle étape de finition

Nous allons maintenant décrire en détail le procédé pour réduire la taille et le nombre d'imperfections en surface d'un composant optique.

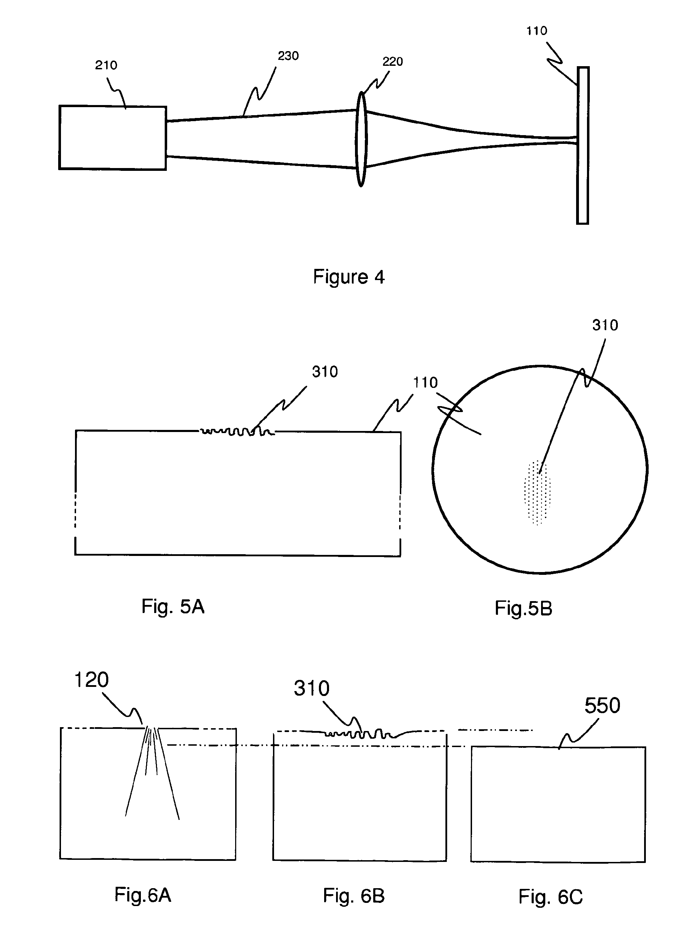

La figure 4 représente un dispositif pour l'étape 35, 55 et/ou 75 de retouche locale par laser CO₂. La retouche locale par laser consiste à refondre localement la matière qui entoure un défaut de surface optique à supprimer 120. La source 210 est de préférence un laser CO₂ continu ou impulsionnel de fréquence de répétition de l'ordre de quelques kHz. De préférence, le laser CO₂ est un laser CO₂ qui émet un faisceau infrarouge 230 à une longueur d'onde d'émission de 10,6 µm qui est focalisé à l'aide d'une lentille 220 sur le dommage 120 localisé sur la surface optique 110 du composant optique. Le matériau du composant optique 110, qui est généralement de la silice, ou un alliage à base de silice, a la propriété d'être très peu absorbant dans son domaine d'utilisation mais fortement absorbant pour des rayonnements dans l'infrarouge lointain. Le composant optique absorbe fortement l'énergie du faisceau 230 et s'échauffe. Lorsque la température de transition vitreuse, c'est-à-dire pour une viscosité voisine de 10¹³ poises, est dépassée, la matière se ramollit localement. De préférence, la température du verre soumis au faisceau laser atteint 1200 à 1800 K. Ce ramollissement permet une réorganisation de la matière plus ou moins rapide suivant la viscosité atteinte qui est fonction de la température. C'est lors de ce ramollissement, que les fractures et défauts disparaissent. La température locale de la matière doit rester inférieure à la température d'éjection de la matière, pour éviter toute perte de matière fondue. En particulier, il est recommandé de limiter l'échauffement de la silice pour ne pas provoquer son éjection massive.

Une des particularités du procédé de retouche laser est de choisir les paramètres de cette opération tels que la densité de puissance, pour effectuer une refonte sur toute la profondeur du défaut mais en limitant les déplacements de matière. La refonte est une réorganisation de la structure de la matière. Cette étape est réussie si toutes les fractures du défaut de surface à supprimer ont été refondues.

Avantageusement, la refonte locale est combinée à un balayage spatial du faisceau laser sur la surface du composant optique le long du défaut de surface à supprimer.

La figure 5 montre schématiquement l'effet d'une retouche laser sur un défaut de surface, vue en section (fig. 5A) et vue de face (Fig. 5B). L'effet de la refonte locale par laser est de supprimer le défaut de surface et de produire une zone de matériau refondu 310. Malgré les précautions pour limiter la puissance déposée, la refonte locale crée, en lieu et place du défaut 120, une zone de matériau refondu présentant une déformation de surface 310 causée par un déplacement et/ou à une compression de matière. Suivant les paramètres d'utilisation du laser CO₂, la surface de la zone de matériau refondu peut présenter des déformations de surface ayant une forme générale de cratère ou de tranchée et/ou des ondulations de surface ou encore être proche de la qualité de surface d'une surface polie. Bien que les réglages paramétriques permettent d'obtenir une déformation de surface de moins de 1 µm de profondeur pour les étapes 35, 55 et 75, cette déformation de surface 310 est trop importante par rapport aux spécifications de planéité des surfaces des composants optiques pour des applications courantes.

Après la retouche locale par laser CO₂, le composant reprend la gamme de fabrication classique et est donc conduit de l'étape 35 à l'étape de polissage 40' ou de l'étape 55 à une étape de finition 60'. Les différents procédés de polissage et de finition connus de l'homme de l'art peuvent s'appliquer à la méthode que nous proposons. Le polissage 40' permet de retrouver une planéité conforme pour la surface du composant optique. Comme les déformations appliquées lors de la retouche par laser CO₂ sont très localisées, la planéité du composant optique est peu affectée et les paramètres de la gamme de fabrication classique ne sont pas modifiés. Les enlèvements de matière dans la gamme classique sont supérieurs au micromètre et supérieurs à la profondeur de la déformation de surface 310 comme cela est schématisé sur la figure 6.

Comme l'illustrent les figures 6A, 6B et 6C en vue de coupe, l'enlèvement nécessaire pour retrouver la planéité de la surface est moins important lorsque le défaut a été supprimé par le laser CO₂ que l'enlèvement correspondant à la profondeur du défaut initial 120. Grâce à l'utilisation du laser CO₂ pendant la fabrication du composant optique, la retouche effectuée est à la fois locale et en profondeur.

La figure 7 représente schématiquement une courbe de mesure de la qualité optique de la surface optique d'un composant optique en fonction de la durée du procédé de fabrication (en unités arbitraires), respectivement selon un procédé de fabrication détaillé en lien avec la figure 1 (courbe en trait pointillés) et selon le procédé de l'invention (courbe en trait plein). On observe que le procédé itératif classique ne permet pas d'atteindre une qualité de surface optique parfaite, même en allongeant la durée de fabrication par la réitération des étapes de douci et/ou de polissage. Au contraire, le procédé de l'invention permet d'atteindre plus rapidement une qualité optique optimale. Le procédé de l'invention permet un enchaînement linéaire des actions de doucissage et de poli, sans répétition de ces étapes, ce qui présente l'avantage de maîtriser les coûts et les délais de fabrication. Le principal avantage du procédé de l'invention est donc de permettre la fabrication de composants optiques de meilleure qualité en un temps plus court comme l'illustre la figure 7.

Le procédé de l'invention s'applique avantageusement à des composants optiques en verre de silice.

Un autre avantage du procédé de fabrication de l'invention est sa compatibilité avec toutes les gammes de fabrication des fabricants de composants optiques, qui ne nécessite pas de changement de paramètres dans ces gammes.

L'augmentation de la qualité des composants optiques permet d'améliorer la durée de vie des composants optiques exposés à un rayonnement laser de forte puissance. Ce procédé permet ainsi d'augmenter la puissance laser à laquelle est soumis le composant optique sur chaîne laser. Les autres avantages de ce procédé sont sa simplicité de mise en oeuvre et sa rapidité de réalisation.

Le principal inconvénient du procédé de l'invention est qu'il met en oeuvre des outils non conventionnels (laser CO₂) pour le polisseur.

Une application du procédé de l'invention est la production de composants optiques pour les chaînes lasers de puissance. Ce procédé permet un gain de production puisque les composants optiques d'aspect non conforme peuvent être corrigés, d'où une réduction des pertes de fabrication.

## Revendications

1. Procédé de fabrication d'un composant optique (100) comprenant un substrat en matériau fusible, ledit procédé comprenant les étapes a) et b) ou les étapes a)-b) et c) ou les étapes a)-b) -c) et d) suivantes :
a. Ébauchage (10) du composant optique (100) pour former au moins une surface optique (110) sur ledit substrat ;
b. Doucissage (20) de ladite surface optique (110) du composant optique (100) de manière à obtenir une surface optique doucie ;
c. Polissage (40) de ladite surface optique doucie de manière à obtenir une surface optique polie ;
d. Finition (60) de ladite surface optique polie de manière à obtenir une surface optique finie ;
**caractérisé en ce que** ledit procédé comprend, suite à l'une quelconque des étapes b), et/ou c), les étapes suivantes :
e. Contrôle (30', 50', 70') de la surface optique doucie ou polie du composant optique pour détecter et localiser au moins un défaut de surface à supprimer (120) sur la surface optique doucie ou polie du composant optique ;
f. Pour chaque défaut de surface à supprimer (120) localisé à l'étape e), application d'un faisceau laser (35, 55, 75) sur une zone englobant ledit défaut de surface à supprimer, ledit faisceau laser ayant une longueur d'onde d'émission laser apte à être absorbée par ledit matériau, de manière à produire une refonte locale du matériau fusible, la densité de puissance du faisceau laser et la durée d'application du faisceau laser étant fonction des dimensions transverses du défaut de surface à supprimer de manière à former, à la place du défaut de surface à supprimer (120), une zone de matériau refondu par laser (310) ;
g. Poursuite du procédé de fabrication du composant optique à l'étape c) lorsque l'étape f) a été effectuée avant la fin de l'étape c) ou respectivement à l'étape d) lorsque l'étape f) a été effectuée après la fin de l'étape c).

2. Procédé de fabrication d'un composant optique (100) selon la revendication 1, dans lequel l'étape e) de contrôle (30', 50', 70') de la surface optique du composant optique comprend un acidage chimique.

3. Procédé de fabrication d'un composant optique (100) selon l'une des revendications 1 à 2, dans lequel l'étape e) de contrôle (30', 50', 70') comprend une mesure optique de diffusion et/ou de diffraction.

4. Procédé de fabrication d'un composant optique (100) selon l'une des revendications 1 à 3, dans lequel l'étape e) de contrôle (30', 50', 70') comprend la détection et localisation d'au moins un défaut de surface (120) ayant une dimension transverse supérieure ou égale à 10 microns sur la surface optique.

5. Procédé de fabrication d'un composant optique (100) selon l'une des revendications 1 à 4, dans lequel l'étape f) d'application d'un faisceau laser (35, 55, 75) comprend l'application d'un faisceau laser CO₂ à une longueur d'onde de 10.6 µm, ledit laser étant continu ou pulsé.

6. Procédé de fabrication d'un composant optique (100) l'une des revendications 1 à 5, dans lequel le matériau fusible est du verre et l'étape f) d'application d'un faisceau laser (35, 55, 75) entraîne une élévation de la température locale du verre, ladite température locale du verre étant comprise entre 1000K et 2000K dans une zone englobant ledit défaut de surface à supprimer (120) localisé à l'étape e).

7. Procédé de fabrication d'un composant optique (100) selon l'une des revendications 1 à 6, dans lequel l'étape f) est combinée à un balayage spatial du faisceau laser sur la surface du composant optique le long du défaut de surface à supprimer (120).

8. Procédé de fabrication d'un composant optique (100) selon l'une des revendications 1 à 7, dans lequel l'étape de polissage (40) qui suit l'étape f) comprend un enlèvement de matière sur une épaisseur inférieure à la profondeur du défaut initial de surface (120) et supérieure ou égale à la profondeur des déformations de surface de la zone de matériau refondu par laser (310) générée par l'étape f) d'application du faisceau laser.

9. Procédé de fabrication d'un composant optique (100) selon la revendication 8, dans lequel l'enlèvement de matière lors de l'étape de polissage qui suit l'étape f) est compris entre 1 et 20 microns.

10. Procédé de durcissement aux rayonnements laser de puissance d'un composant optique (100) comprenant un substrat en matériau fusible, ledit substrat comprenant une surface optique (110) polie ou finie, ledit procédé de durcissement comprenant les étapes suivantes :
h. Contrôle de la surface optique (110) polie ou finie du composant optique (100) pour détecter et localiser au moins un défaut de surface à supprimer (120) sur la surface optique (110) du composant optique (100) ;
i. Pour chaque défaut de surface à supprimer localisé à l'étape h), application d'un faisceau laser sur une zone englobant le défaut de surface (120), ledit faisceau laser ayant une longueur d'onde d'émission laser apte à être absorbée par ledit matériau, de manière à produire une refonte locale du matériau fusible, la densité de puissance du faisceau laser et la durée d'application du faisceau laser étant fonction des dimensions transverses du défaut de surface à supprimer localisé à l'étape h) de manière à former, à la place du défaut de surface à supprimer (120), une zone de matériau refondu par laser (310) ;
j. Reprise du procédé de fabrication du composant optique à l'étape c) du procédé de la revendication 1 lorsque l'étape i) a été effectuée avant la fin de l'étape c); ou respectivement à l'étape d) du procédé de la revendication 1 lorsque l'étape i) a été effectuée après la fin de l'étape c).

## Patentansprüche

1. Verfahren zum Herstellen einer optischen Komponente (100), die ein Substrat aus einem schmelzbaren Material umfasst, wobei das Verfahren die folgenden Schritte a) und b) oder die Schritte a), b) und c) oder die Schritte a), b), c) und d) umfasst:
a) Rohbearbeiten (10) der optischen Komponente (100), um mindestens eine optische Oberfläche (110) auf dem Substrat zu bilden;
b) Klarschleifen (20) der optischen Oberfläche (110) der optischen Komponente (100), um eine klargeschliffene optische Oberfläche zu erzielen;
c) Polieren (40) der klargeschliffenen optischen Oberfläche, um eine polierte optische Oberfläche zu erzielen;
d) Fertigstellen (60) der polierten optischen Oberfläche, um eine fertiggestellte optische Oberfläche zu erzielen;
**dadurch gekennzeichnet, dass** das Verfahren nach einem der Schritte b) und/oder c) die folgenden Schritte umfasst:
e) Kontrollieren (30', 50', 70') der klargeschliffenen oder polierten optischen Oberfläche der optischen Komponente, um mindestens einen zu behebenden Oberflächenfehler (120) auf der klargeschliffenen oder polierten optischen Oberfläche der optischen Komponente zu erkennen und zu lokalisieren;
f) für jeden zu behebenden Oberflächenfehler (120), der in Schritt e) lokalisiert wurde, Anwenden eines Laserstrahls (35, 55, 75) auf eine Zone, die den zu behebenden Oberflächenfehler einschließt, wobei der Laserstrahl eine Laseremissions-Wellenlänge aufweist, die geeignet ist, um von dem Material absorbiert zu werden, um ein lokales Einschmelzen des schmelzbaren Materials zu bewirken, wobei die Leistungsdichte des Laserstrahls und die Anwendungsdauer des Laserstrahls von den Querabmessungen des zu behebenden Oberflächenfehlers abhängig sind, um anstelle des zu behebenden Oberflächenfehlers (120) einer Zone von durch den Laser (310) eingeschmolzenem Material zu bilden;
g) Fortführen des Verfahrens zum Herstellen der optischen Komponente in Schritt c), wenn Schritt f) vor dem Ende von Schritt c) ausgeführt wurde, oder in Schritt d), wenn Schritt f) nach dem Ende von Schritt c) ausgeführt wurde.

2. Verfahren zum Herstellen einer optischen Komponente (100) nach Anspruch 1, wobei der Schritt e) des Kontrollierens (30', 50', 70') der optischen Oberfläche der optischen Komponente ein chemisches Säuern umfasst.

3. Verfahren zum Herstellen einer optischen Komponente (100) nach einem der Ansprüche 1 bis 2, wobei der Schritt e) des Kontrollierens (30', 50', 70') eine optische Streuungs- und/oder Beugungsmessung umfasst.

4. Verfahren zum Herstellen einer optischen Komponente (100) nach einem der Ansprüche 1 bis 3, wobei der Schritt e) des Kontrollierens (30', 50', 70') die Erkennung und Lokalisierung mindestens eines Oberflächenfehlers (120) umfasst, der eine Querdimension aufweist, die größer oder gleich 10 Mikrometer auf der optischen Oberfläche ist.

5. Verfahren zum Herstellen einer optischen Komponente (100) nach einem der Ansprüche 1 bis 4, wobei der Schritt f) des Anwendens eines Laserstrahls (35, 55, 75) das Anwenden eines CO₂-Laserstrahls auf einer Wellenlänge von 10,6 µm umfasst, wobei der Laser ein Dauerstrich- oder Impulslaser ist.

6. Verfahren zum Herstellen einer optischen Komponente (100) nach einem der Ansprüche 1 bis 5, wobei das schmelzbare Material Glas ist, und der Schritt f) des Anwendens eines Laserstrahls (35, 55, 75) zu einer lokalen Temperaturerhöhung des Glases führt, wobei die lokale Temperatur des Glases zwischen 1000 K und 2000 K in einer Zone liegt, die den zu behebenden Oberflächenfehler (120) einschließt, der in Schritt e) lokalisiert wurde.

7. Verfahren zum Herstellen einer optischen Komponente (100) nach einem der Ansprüche 1 bis 6, wobei Schritt f) mit einem räumlichen Streichen des Laserstrahls über die Oberfläche der optischen Komponente entlang dem zu behebenden Oberflächenfehler (120) kombiniert ist.

8. Verfahren zum Herstellen einer optischen Komponente (100) nach einem der Ansprüche 1 bis 7, wobei der Schritt des Polierens (40), der auf den Schritt f) folgt, einen Materialabtrag über eine Dicke, die kleiner als die Tiefe des ursprünglichen Oberflächenfehlers (120) und größer oder gleich der Tiefe der Oberflächenverformungen der Zone des von dem Laser (310) eingeschmolzenen Materials ist, die im Schritt f) des Anwenden des Laserstrahls generiert wird.

9. Verfahren zum Herstellen einer optischen Komponente (100) nach Anspruch 8, wobei der Materialabtrag bei dem Schritt des Polierens, der auf Schritt f) folgt, zwischen 1 und 20 Mikrometer liegt.

10. Verfahren zum Aushärten durch Leistungslaserbestrahlungen einer optischen Komponente (100), die ein Substrat aus einem schmelzbaren Material umfasst, wobei das Substrat eine polierte oder fertiggestellte optische Oberfläche (110) umfasst, wobei das Aushärtungsverfahren die folgenden Schritte umfasst:
h) Kontrollieren der polierten oder fertiggestellten optischen Oberfläche (110) der optischen Komponente (100), um mindestens einen zu behebenden Oberflächenfehler (120) auf optischen Oberfläche (110) der optischen Komponente (100) zu erkennen und zu lokalisieren;
i) für jeden zu behebenden Oberflächenfehler, der in Schritt h) lokalisiert wurde, Anwenden eines Laserstrahls auf eine Zone, die den Oberflächenfehler (120) einschließt, wobei der Laserstrahl eine Laseremissions-Wellenlänge aufweist, die geeignet ist, um von dem Material absorbiert zu werden, um ein lokales Einschmelzen des schmelzbaren Materials zu bewirken, wobei die Leistungsdichte des Laserstrahls und die Anwendungsdauer des Laserstrahls von den Querabmessungen des zu behebenden Oberflächenfehlers abhängig sind, der in Schritt h) lokalisiert wurde, um anstelle des zu behebenden Oberflächenfehlers (120) eine Zone von durch den Laser (310) eingeschmolzenem Material zu bilden;
j) Wiederaufnehmen des Verfahrens zum Herstellen der optischen Komponente in Schritt c) des Verfahrens nach Anspruch 1, wenn Schritt i) nach dem Ende von Schritt c) ausgeführt wurde, bzw. nach Schritt d) des Verfahrens nach Anspruch 1, wenn Schritt i) nach dem Ende von Schritt c) ausgeführt wurde.

## Claims

1. A method of manufacturing an optical component (100) comprising a substrate made of a fusible material, said method comprising the following steps a) and b) or steps a), b) and c) or steps a), b), c) and d):
a. Trueing (10) the optical component (100) to form at least one optical surface (110) on said substrate;
b. Smooth grinding (20) said optical surface (110) of the optical component (100) so as to obtain a smoothed optical surface;
c. Polishing (40) said smoothed optical surface so as to obtain a polished optical surface;
d. Finishing (60) said polished optical surface so as to obtain a finished optical surface;
**characterized in that** said method comprises, after any one of steps b) and/or c), the following steps:
e. Inspecting (30', 50', 70') the smoothed or polished optical surface of the optical component to detect and locate at least one surface defect to be eliminated (120) on the smoothed or polished optical surface of the optical component;
f. For each surface defect to be eliminated (120) located at step e), applying a laser beam (35, 55, 75) over an area encompassing said surface defect to be eliminated, said laser beam having a laser emission wavelength liable to be absorbed by said material, so as to produce a local remelting of the fusible material, the power density of the laser beam and the duration of application of the laser beam being function of the transverse dimensions of the surface defect to be eliminated (120), so as to form, in place of the surface defect to be eliminated, an area of laser remelted material (310);
g. Continuing the method of manufacturing the optical component at step c) when step f) has been performed before the end of step c); or, respectively, at step d) when step f) has been performed after the end of step c).

2. The method of manufacturing an optical component (100) according to claim 1, wherein step e) of inspection (30', 50', 70') of the optical surface of the optical component comprises a chemical etching.

3. The method of manufacturing an optical component (100) according to one of claims 1 to 2, wherein step e) of inspection (30', 50', 70') comprises an optical measurement of scattering and/or diffraction.

4. The method of manufacturing an optical component (100) according to one of claims 1 to 3, wherein step e) of inspection (30', 50', 70') comprises the detection and location of at least one surface defect (120) having a transverse dimension greater than or equal to 10 microns on the optical surface.

5. The method of manufacturing an optical component (100) according to one of claims 1 to 4, wherein step f) of application of a laser beam (35, 55, 75) comprises the application of a CO₂ laser beam at a wavelength of 10.6 µm, said laser being continuous or pulsed.

6. The method of manufacturing an optical component (100) according to one of claims 1 to 5, wherein the fusible material is glass and step f) of application of a laser beam (35, 55, 75) causes an increase of the local temperature of the glass, said local temperature of the glass being comprised between 1000K and 2000K in an area encompassing said surface defect to be eliminated (120) located at step e).

7. The method of manufacturing an optical component (100) according to one of claims 1 to 6, wherein step f) is combined to a spatial scanning of the laser beam over the surface of the optical component along the surface defect to be eliminated (120).

8. The method of manufacturing an optical component (100) according to one of claims 1 to 7, wherein the polishing step (40) that follows step f) comprises a material removal over a thickness lower than the depth of the initial surface defect (120) and higher than or equal to the depth of the surface deformations of the area of laser remelted material (310) generated by step f) of application of the laser beam.

9. The method of manufacturing an optical component (100) according to claim 8, wherein the material removal during the polishing step that follows step f) is comprised between 1 and 20 microns.

10. A method of hardening with respect to power laser radiations an optical component (100) comprising a substrate made of a fusible material, said substrate comprising a polished or finished optical surface (110), said hardening method comprising the steps of:
h. Inspecting the polished or finished optical surface (110) of the optical component (100) to detect and locate at least one surface defect to be eliminated (120) on the optical surface (110) of the optical component (100);
i. For each surface defect to be eliminated located at step h), applying a laser beam over an area encompassing the surface defect (120), said laser beam having a laser emission wavelength liable to be absorbed by said material, so as to produce a local remelting of the fusible material, the power density of the laser beam and the duration of application of the laser beam being function of the transverse dimensions of the surface defect to be eliminated located at step h), so as to form, in place of the surface defect to be eliminated (120), an area of laser remelted material (310);
j. Resuming the method of manufacturing the optical component at step c) of the method of claim 1 when step i) has been performed before the end of step c); or, respectively, at step d) of the method of claim 1 when step i) has been performed after the end of step c).
